# EUROPEAN PATENT APPLICATION

(11) **EP 3 175 701 A1**
(43) Date of publication of application: **07.06.2017**
(21) Application number: 15826904.3
(22) Date of filing: 28.07.2015
(51) Int. Cl.: A01G 7/00, G06T 7/20

(54) **GROWTH STATE ESTIMATION DEVICE, PLANT GROWTH OBSERVATION SYSTEM, GROWTH STATE ESTIMATION METHOD, GROWTH INDEX ESTIMATION METHOD, AND RECORDING MEDIUM**

(30) Priority: 29.07.2014 JP 2014153551
(71) Applicant: NEC Corporation, Tokyo 108-8001 (JP)
(72) Inventor: FUKUSHI, Kenichiro, Tokyo 108-8001 (JP); ISHIDA, Hisashi, Tokyo 108-8001 (JP); NOZAKI, Takeo, Tokyo 108-8001 (JP); KAMEDA, Yoshio, Tokyo 108-8001 (JP); KUSUMOTO, Manabu, Tokyo 108-8001 (JP); MATSUMOTO, Toru, Tokyo 108-8001 (JP); HSU, Chenpin, Tokyo 108-8001 (JP)
(74) Representative: Vossius & Partner Patentanwälte Rechtsanwälte mbB
(86) International application number: PCT/JP2015/003779
(87) International publication number: WO 2016/017150

(57) **Abstract**

The present invention estimates with greater accuracy the growth state of plants. A growth state estimation device which comprises: a division means which divides a photographic image of a plant into a plurality of division regions on the basis of growth characteristics of the plant; a calculation means which, with respect to each of the plurality of division regions divided by the division means, calculates statistics of division image data of each division region, said division image data comprising images of the division regions; and an estimation means which estimates the growth state of the plant on the basis of the statistics calculated by the calculation means.

## Description

### Technical Field

The present invention relates to a growth state estimation apparatus, a plant growth observation system, a growth state estimation method, a growth index estimation method, and a recording medium.

### Background Art

A growth state of a plant body has been judged by a cultivation manager such as a farmer using intuition and experience. In recent years, however, a method for estimating the growth state of a plant body using a technology such as IT (Information Technology) have been proposed.

PTL 1 describes a method in which, from a captured image of a plant body, only an image region in which the plant body appears is extracted, a plurality of image features are extracted from the extracted image region, and then the image features are used to estimate a live weight of the plant body.

PTL 2 describes an apparatus in which a plurality of stages for classification depending on growth of a plant in a growth process of the plant are provided and which detects a degree of growth of the plant from a state of the plant included in each detection target set for each growth stage.

NPL 1 describes a system that extracts only a plant body region from a captured image of a plant body, counts the number of pixels in an image of the extracted plant body region to calculate a projected area and a projected area ratio, and controls liquid supply based on a change of the projected area.

### Citation List

### Patent Literature

PTL 1: Japanese Patent Laid-open Publication No. 2012-208839
PTL 2: Japanese Patent Laid-open Publication No. 2013-5725

### Non Patent Literature

NPL 1: Kenji Omasa, "Advanced imaging technology in agricultural and environmental fields - From phytoimaging to remote sensing - ",Japanese Association of Agricultural Electrification, February, 2007, pp. 24-26

### Summary of Invention

### Technical Problem

Growth characteristics of a plant body differ from part to part. However, the technique described in NPL 1 may not detect a decrease in a projected area due to withering when an increase in the projected area due to growth of a plant body and the decrease in the projected area due to the withering simultaneously occur, because the technique uses an image of an entire plant body to calculate the projected area. This may cause delay in determination that the plant body is withering and therefore delay in timing of liquid supply, which may kill the plant body, in the system described in NPL 1.

The technique described in PTL 1 uses a plurality of image features extracted from an image region in which an entire plant body appears to estimate a live weight. However, there is a difference in texture between a part of a plant body where there are many burgeons and a part where there are many old leaves, and mixture of the parts to estimate the live weight may lower accuracy of the estimation.

The technique described in PTL 2 compares respective states of leaves, stem, flowers, fruits, root and other parts of an individual plant body to be managed with expected degrees of growth to determine a growth state based on the respective sates of leaves, stem, flowers, fruits, root and other parts. However, the technique described in PTL 2 does not take into consideration a plant body that has a part with a high degree of growth and a part with a low degree of growth, and therefore an accuracy of estimation of the growth state of the plant body may be low.

The present invention has been made in light of the problems described above and an object of the present invention is to provide a technique to estimate a growth state of a plant body with improved accuracy.

### Solution to Problem

A growth state estimation apparatus according to one aspect of the present invention includes: division means for dividing a captured image of a plant body into a plurality of segmented regions, based on a growth characteristic of the plant body; calculation means for calculating, for each of the plurality of segmented regions that is divided by the division means, a statistic on division image data representing an image of the segmented region; and estimation means for estimating a growth state of the plant body, based on the statistic calculated by the calculation means.

A plant growth observation system according to one aspect of the present invention includes: the growth state estimation apparatus; and an imaging apparatus that captures an image of the plant body and provides a captured image for division means of the growth state estimation apparatus.

A growth state estimation method according to one aspect of the present invention includes: dividing a captured image of a plant body into a plurality of segmented regions, based on a growth characteristic of the plant body; calculating, for each of the plurality of segmented regions that is divided, a statistic on division image data representing an image of the segmented region; and estimating a growth state of the plant body, based on the statistic calculated.

A growth index estimation method according to one aspect of the present invention includes: imaging a plant body; receiving captured image data representing captured image which is captured; dividing the captured image represented by the received captured image data into a plurality of segmented regions, based on a growth characteristic of the plant body; calculating, for each of the plurality of segmented regions that is divided, a statistic on division image data representing an image of the segmented region; and estimating a growth index indicating a growth state of the plant body, based on the calculated statistic.

The present invention also includes a computer program for causing a computer to implement the growth state estimation apparatus, the plant growth observation system, the growth state estimation method, or the growth index estimation method, and a computer-readable storage medium on which the computer program is stored.

### Advantageous Effects of Invention

The present invention enables highly accurate estimation of a growth state of a plant body.

### Brief Description of Drawings

[Fig. 1] Fig. 1 is a diagram illustrating an example configuration of a plant growth observation system according to a first example embodiment of the present invention.
[Fig. 2] Fig. 2 is a functional block diagram illustrating example functional configurations of a plant growth observation apparatus and a storage device in the plant growth observation system according to the first example embodiment of the present invention.
[Fig. 3] Fig. 3 is a diagram illustrating an example flow of a growth index estimation process in the plant growth observation apparatus of the plant growth observation system according to the first example embodiment of the present invention.
[Fig. 4] Fig. 4 is a diagram illustrating an example configuration of a plant growth observation system according to a second example embodiment of the present invention.
[Fig. 5] Fig. 5 is a diagram illustrating an example flow of a growth index estimation process in a plant growth observation apparatus of the plant growth observation system according to the second example embodiment of the present invention.
[Fig. 6] Fig. 6 is a functional block diagram illustrating example functional configurations of a plant growth observation apparatus and a storage device in a plant growth observation system according to a third example embodiment of the present invention.
[Fig. 7] Fig. 7 is a functional block diagram illustrating example functional configurations of a plant growth observation apparatus and a storage device in a plant growth observation system according to a fourth example embodiment of the present invention.
[Fig. 8] Fig. 8 is a diagram illustrating an example flow of a growth index estimation process in the plant growth observation apparatus in the plant growth observation system according to the fourth example embodiment of the present invention.
[Fig. 9] Fig. 9 is a functional block diagram illustrating an example functional configuration of a growth state estimation apparatus according to a fifth example embodiment of the present invention.
[Fig. 10] Fig. 10 is a diagram illustrating an example hardware configuration of a plant growth observation apparatus, a growth state estimation apparatus and a storage device according to example embodiments of the present invention.
[Fig. 11] Fig. 11 is a graph of results of calculations of statistics in an example.

### Example Embodiment

### First Example Embodiment

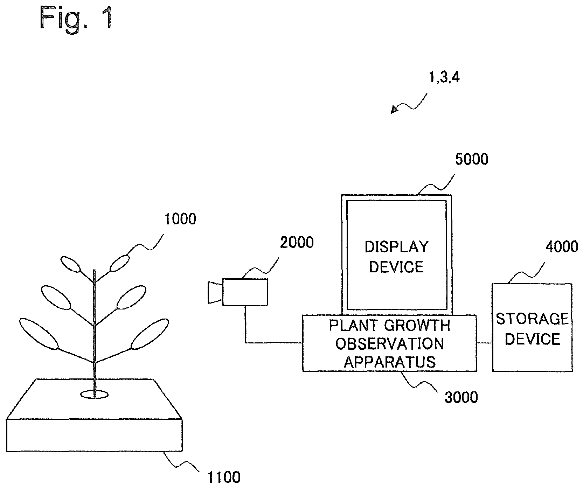

A first example embodiment of the present invention will be described in detail with reference to the drawings. Fig. 1 is a diagram illustrating an example configuration of a plant growth observation system 1 according to the first example embodiment. As illustrated in Fig. 1, the plant growth observation system 1 according to the present example embodiment is a system that observes the growth of a plant body 1000. As illustrated in Fig. 1, the plant growth observation system 1 includes an imaging apparatus 2000, a plant growth observation apparatus (a growth state estimation apparatus) 3000, a storage device 4000, and a display device 5000.

The plant body 1000 is supported with a plant body supporter 1100. Examples of the plant body 1000 in the present example embodiment include, but not limited to, a plant planted in a pot or a planter.

The apparatuses and devices are interconnected using a Local Area Network (LAN) cable or the like, for example. However, the present example embodiment is not so limited and a configuration may be used in which the apparatuses and devices are interconnected through a wireless LAN.

The imaging apparatus 2000 is a device that captures images of a plant body 1000 to be observed. The imaging apparatus 2000 may be implemented by a common digital camera, a web camera, or the like that is capable of outputting image data with a number of pixels that allows movement of a plant body 1000 to be observed, for example. The imaging apparatus 2000 may be implemented by a web camera or the like including a Charge Coupled Device (CCD) image sensor or a Complementary Metal-Oxide-Semiconductor (CMOS) image sensor with 1920 x 1080 output pixels, for example. However, the present example embodiment is not so limited. The imaging apparatus 2000 sends image data representing a captured image (captured image data) of the plant body 1000 to the plant growth observation apparatus 3000.

The imaging apparatus 2000 according to the present example embodiment captures an image of a plant body 1000 in a direction substantially parallel to a horizontal plane (a horizontal direction) as illustrated in Fig. 1. Accordingly, a captured image which is captured by the imaging apparatus 2000 is an image of the plant body 1000 projected onto a substantially vertical plane and captured image data output from the imaging apparatus 2000 is substantially-vertical-plane-projected image data of the plant body 1000.

The plant growth observation apparatus 3000 receives the captured image data from the imaging apparatus 2000. The plant growth observation apparatus 3000 uses the received captured image data to estimate a growth index of the plant body 1000. The growth index herein is an index of the growth state of a plant body 1000. The growth index may be the height, the leaf area, live weight, the number of flowers, the number of fruits, the fruit size, the elongation speed, withering, the rate of photosynthesis of the plant body 1000, an index of whether to water the plant body 1000, an index of when to water, the number of days until harvest, the sugar content of fruit of the plant body 1000, or the like, for example. The growth index is preferably information with which a user of the plant growth observation system 1 can readily understand the growth state of the plant body 1000. Alternatively, the growth index may be an index that quantifies the aforementioned growth state of the plant body 1000. Details of a functional configuration of the plant growth observation apparatus 3000 will be described with reference to other drawings.

Note that the time intervals at which the plant growth observation apparatus 3000 estimates the growth index of the plant body 1000 are not limited to certain intervals. However, if the time intervals are too short, a large amount of estimated growth index data will result; if the time intervals are too long, the accuracy of the estimated growth index may decrease. It is therefore desirable that the plant growth observation apparatus 3000 perform processing for estimating the growth index at time intervals of 10 minutes, for example, by taking into consideration the growth rate of the plant body 1000.

The storage device 4000 is a device that stores data provided from the plant growth observation apparatus 3000. While the present example embodiment will be described on the assumption that the storage device 4000 is a component separate from the plant growth observation apparatus 3000, the present example embodiment is not so limited. The storage device 4000 may alternatively be built in the plant growth observation apparatus 3000. Data stored in the storage device 4000 will be described with reference to a different drawing.

The display device 5000 is a means for displaying results of processing by the plant growth observation apparatus 3000 and image data captured by the imaging apparatus 2000.

### (Configuration of Plant Growth Observation Apparatus 3000)

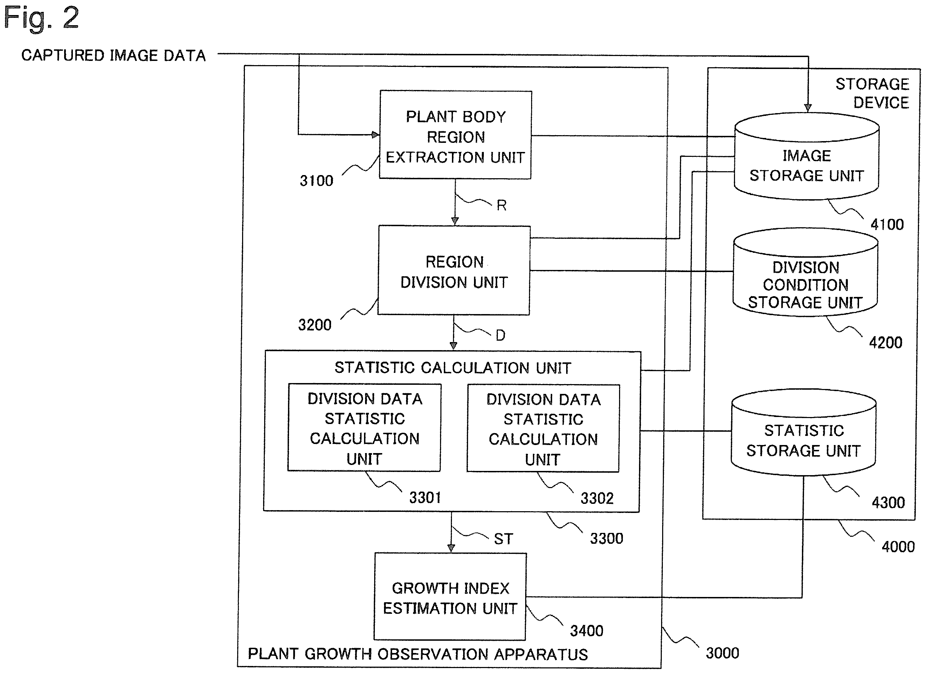

A functional configuration of the plant growth observation apparatus 3000 according to the present example embodiment will be described with reference to Fig. 2. Fig. 2 is a functional block diagram illustrating example functional configurations of the plant growth observation apparatus 3000 and the storage device 4000 in the plant growth observation system 1 according to the present example embodiment. As illustrated in Fig. 2, the plant growth observation apparatus 3000 includes a plant body region extraction unit 3100, a region division unit 3200, a statistic calculation unit 3300, and a growth index estimation unit 3400. Note that arrows connecting the blocks in Fig. 2 are given for the purpose of explaining the direction in which data indicated by labels flows and other data or signals may be communicated between the blocks, of course. Similarly, arrows connecting blocks in other example embodiments described later are given for the purpose of explaining the direction in which data indicated by labels flows and are not intended to put limitations on data or signals between the blocks.

### (Plant body Region Extraction Unit 3100)

The plant body region extraction unit 3100 receives the captured image data from the imaging apparatus 2000. Note that the plant growth observation apparatus 3000 performs processing for estimating a growth index at predetermined time intervals (for example at time intervals of 10 minutes) as stated above and therefore captured image data received from the imaging apparatus 2000 are preferably received at intervals equal to the intervals described above.

The plant body region extraction unit 3100 extracts a region in which a plant body appears (also referred to as a plant body region) from a captured image represented by received captured image data. Specifically, the plant body region extraction unit 3100 uses color information to distinguish a plant body region from the other regions in the captured image and extracts the region distinguished as being the plant body region from the captured image. Many plant bodies 1000 are green, yellow and red, for example. The plant body region extraction unit 3100 therefore preferably distinguishes such color information from other color information in the extraction processing described above to extract the plant body region. Note that there are not limitations on processing for extracting a plant body region performed by the plant body region extraction unit 3100 and any common method may be used. Therefore, description of the extraction processing will be omitted from the description of the present example embodiment.

The plant body region extraction unit 3100 then generates image data (plant body image data R) representing an image of the extracted plant body region (a plant body image) and provides the plant body image data R to the region division unit 3200.

Note that if the captured image data is sent from the imaging apparatus 2000 at predetermined intervals, the plant body region extraction unit 3100 may be triggered by receipt of the captured image data to perform the processing for generating plant body image data R.

The plant body region extraction unit 3100 stores the captured image data received from the imaging apparatus 2000 in an image storage unit 4100 in the storage device 4000. Note that the imaging apparatus 2000 may be configured to store the captured image data directly in the storage device 4000 rather than via the plant growth observation apparatus 3000. The plant body region extraction unit 3100 may store the generated plant body image data R in the image storage unit 4100 in the storage device 4000.

### (Region Division Unit 3200)

The region division unit 3200 receives the plant body image data R provided from the plant body region extraction unit 3100. The region division unit 3200 refers to a division condition storage unit 4200 and divides a plant body image represented by the plant body image data R into two regions in accordance with a predetermined division condition stored in the division condition storage unit 4200. A predetermined division condition herein represents a basis for division, such as the ratio of division of a plant body image. The division basis is registered previously based on growth characteristics of plant bodies. Predetermined division bases stored in the division condition storage unit 4200 will be detailed later. The region division unit 3200 generates data (division image data D-1, division image data D-2) which is consisting of an image of segmented region, for each of the two segmented regions of the divided plant body image.

The region division unit 3200 provides the division image data (division image data D-1 and division image data D-2) generated by dividing the plant body image represented by the plant body image data R to the statistic calculation unit 3300.

Note that when division image data D-1 and division image data D-2 in the present example embodiment are not distinguished from one another or are collectively referred to, these pieces of data will be referred to as division image data D.

The region division unit 3200 may store the division image data D in the image storage unit 4100.

### (Statistic Calculation Unit 3300)

The statistic calculation unit 3300 receives, from the region division unit 3200, the division image data D (division image data D-1 and division image data D-2) which is data generated by the region division unit 3200 and consisting of segmented regions into which a plant body image represented by plant body image data R is divided. The statistic calculation unit 3300 calculates statistic ST using the received division image data D. Statistic herein is a value statistically calculated based on information about pixels contained in an image represented by the division image data D. For example, the statistic may include, but not limited to, the total number of pixels contained in an image represented by the division image data D-1, the height and width of a plant body region, the average value of pixel colors, a color distribution of pixels, the average value of positions of pixels (centroid position), and information about movement of a reference point.

A configuration of the statistic calculation unit 3300 will be described in detail. The statistic calculation unit 3300 includes a division data statistic calculation unit 3301 which calculates a statistic ST-1 on division image data D-1 and a division data statistic calculation unit 3302 which calculates a statistic ST-2 on division image data D-2. The statistic calculation unit 3300 includes as many division data statistic calculation units as the number of divisions of a plant body image. This enables processing for calculating a statistic on the division image data D-1 and processing for calculating a statistic on the division image data D-2 to be performed in parallel.

Note that, in the present example embodiment, when the statistic ST-1 and the statistic ST-2 are not distinguished or are collectively referred to, the statistics ST-1 and ST-2 will be referred to as a statistic ST.

The statistic calculation unit 3300 may be configured to sequentially calculate a statistic on pieces of divided data, rather than including as many division data statistic calculation units as the number of divisions of a plant body image.

The division data statistic calculation unit 3301 may calculate the statistic ST-2 on division image data D-2 and the division data statistic calculation unit 3302 may calculate the statistic ST-1 on division image data D-1.

A process for calculating a statistic in the statistic calculation unit 3300 will be described in further detail. A method for the division data statistic calculation unit 3301 to calculate the statistic ST-1 of division image data D-1 will be described below.

The division data statistic calculation unit 3301 calculates the statistic ST-1 from information such as colors and positions of the pixels contained in the division image data D-1 (pixel information) using the division image data D-1. Note that the colors and positions of the pixels are examples of pixel information used for calculation of the statistic and the present example embodiment is not limited to such pixel information.

Further, past captured image data stored in the image storage unit 4100 or plant body image data extracted from the past captured image data (referred to as past plant body image data) may be additionally used in calculation of the statistic. The past plant body image data may be data divided by the region division unit 3200 in accordance with a predetermined division condition.

An example of calculation of the statistic ST-1 by the division data statistic calculation unit 3301 using the division image data D-1 provided from the region division unit 3200 and the past captured image data stored in the image storage unit 4100 will be described below.

The division data statistic calculation unit 3301 receives the division image data D-1 from the region division unit 3200. In addition, the division data statistic calculation unit 3301 retrieves past captured image data (referred to as captured image data P) from the image storage unit 4100. The captured image data P is captured image data of a captured image which is captured before a predetermined time (for example 10 minutes) from the time when a captured image represented by the captured image data that is original data of plant body image data R , which is original data divided into the division image data D-1. The division data statistic calculation unit 3301 calculates the statistic using movement obtained from the division image data D-1 and the captured image data P. The movement may be represented by optical flow, for example.

Specifically, the division data statistic calculation unit 3301 calculates reference points of a predetermined number (for example, up to 500 samples) from the division image data D-1. Any conventional method may be used for calculating the reference points without limitation and therefore the description of the method will be omitted from the description of the present example embodiment. The division data statistic calculation unit 3301 then calculates optical flow for each of the reference points. Any conventional method may be used for calculating the optical flow without limitation and therefore the description of the method will be omitted from the description the present example embodiment.

In this way, the division data statistic calculation unit 3301 calculates the average X component value and the average Y component value of the optical flow using the optical flow obtained from the division image data D-1 and the captured image data P. Here, the X-direction (X-axis) represents the horizontal direction of the division image data D-1 and the Y-direction (Y-axis) represents the vertical direction of the division image data D-1. As described above, the imaging apparatus 2000 captures an image of the plant body 1000 from the horizontal direction. Accordingly, the Y-axis is a direction substantially parallel to the vertical direction and the X-axis is a direction substantially perpendicular to the vertical direction. The division data statistic calculation unit 3301 provides the calculated average X component value and the calculated average Y component value to the growth index estimation unit 3400 as the statistic ST-1.

The method of calculating the statistic ST-1 using optical flow by the division data statistic calculation unit 3301 is merely an example of a method for calculating the statistic ST using the division image data D and the captured image data P and other methods are not excluded from the present example embodiment.

Further, the division data statistic calculation unit 3301 provides the calculated the statistic ST-1 to the growth index estimation unit 3400 together with information indicating the plant body image data D for which the statistic ST-1 is calculated (in this case, the division image data D-1). Note that when the division data statistic calculation unit 3301 is associated with division image data D-1 so that the division data statistic calculation unit 3301 calculates the statistic ST-1 on only the division image data D-1, it is obvious that the statistic calculated by the division data statistic calculation unit 3301 is the statistic (statistic ST-1) on the division image data D-1. In this case, the division data statistic calculation unit 3301 may provide the statistic ST-1 alone to the growth index estimation unit 3400.

In addition, the division data statistic calculation unit 3301 stores the calculated the statistic ST-1 in a statistic storage unit 4300 together with information indicating the division image data D-1 for which the statistic ST-1 is calculated.

While a function of the division data statistic calculation unit 3301 has been described above, the description is applicable to a function of the division data statistic calculation unit 3302 as well, where the division image data D-1 is replaced with division image data D-2 and the statistic ST-1 is replaced with the statistic ST-2.

### (Growth Index Estimation Unit 3400)

The growth index estimation unit 3400 receives the statistic ST calculated by the statistic calculation unit 3300 from the statistic calculation unit 3300 together with information indicating division image data D for which the statistic ST is calculated. The growth index estimation unit 3400 estimates a growth index of the plant body 1000 using the statistic ST-1 and/or the statistic ST-2.

The statistic(s) calculated at any one or more time points in the past and stored in the statistic storage unit 4300 may be additionally used in estimating the growth index.

Further, the growth index estimation unit 3400 may be configured to calculate a quantified growth index of the plant body 1000 using the statistic ST.

The growth index estimation unit 3400 may be configured to send information indicating an estimated growth index to the display device 5000 in order to present the growth index to a user.

### (Storage Device 4000)

The storage device 4000 includes the image storage unit 4100, the division condition storage unit 4200, and the statistic storage unit 4300 as illustrated in Fig. 2.

The image storage unit 4100 stores the captured image data representing a captured image which is captured by the imaging apparatus 2000. In addition, the image storage unit 4100 may store plant body image data R generated by the plant body region extraction unit 3100. Further, the image storage unit 4100 may store division image data D generated by the region division unit 3200.

The division condition storage unit 4200 stores a predetermined division condition. The predetermined division condition includes, for example, information such as ratios of regions into which a plant body image is to be divided and a reference line which serves as a reference for the division. A predetermined division condition may be for example, "divide a plant body image using a straight line parallel to the horizontal direction of the plant body image so that the length of the plant body image in the vertical direction is divided at a predetermined ratio". The division condition is registered in advance based on a growth characteristic of the plant body 1000.

Example of the growth characteristic will now be described. Elongation of a plant body 1000 and enlargement of leaves associated with growth of the plant body 1000 are often occur at ends of branches and stems (terminal buds). Occurrent of such elongation and leaf enlargement at terminal buds will be referred to as an elongation characteristic. On the other hand, elongation and the like hardly occur in parts of a stem that are near the root. This will be referred to as non-elongation characteristic. In other words, a part that has the elongation characteristic elongates at a greater elongation amount and a part that has the non-elongation characteristic elongates at a smaller elongation amount. The elongation characteristic develops at terminal buds and most of such terminal buds elongate in the direction opposite to the direction of gravitational force.

As described above, the imaging apparatus 2000 captures an image of a plant body 1000 in the horizontal direction and therefore the captured image data representing the captured image which is captured by the imaging apparatus 2000 is substantially-vertical-plane-projected image data of the plant body 1000. The upper part of the captured image or a plant body image extracted from the captured image which is divided into two in the vertical direction will be referred to as the top region and the lower part in the vertical direction will be referred to as the bottom region.

A division condition is set based on the elongation characteristic and the non-elongation characteristic of the plant body 1000 so that parts with the elongation characteristic, such as terminal buds, are included in the top region and parts with the non-elongation characteristic are included in the bottom region.

While the present example embodiment has been described by using an example in which a reference line for dividing a plant body image into two regions, i.e. the top region and the bottom region, is a straight line parallel to the horizontal direction of the plant body image, the present example embodiment is not so limited. A reference line may be a line angled at predetermined degrees to the horizontal direction. Further, a reference line may be a curve.

The statistic storage unit 4300 stores the statistic ST calculated by the statistic calculation unit 3300 along with information indicating the division image data D for which the statistic ST is calculated.

Note that in some configurations, data stored in the image storage unit 4100, data stored in the division condition storage unit 4200, and data stored in the statistic storage unit 4300 may be stored in the same storage unit.

### (Growth Index Estimation Process)

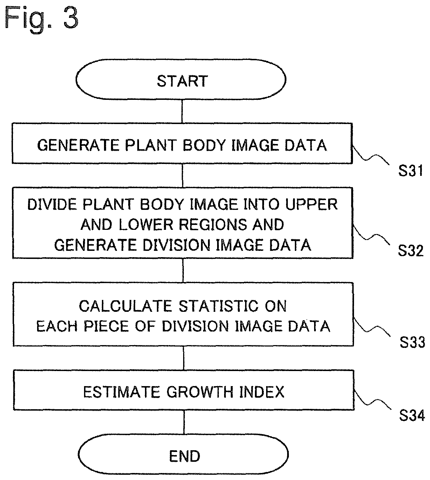

An operation in the plant growth observation apparatus 3000 of the plant growth observation system 1 according to the present example embodiment will be described next with reference to Fig. 3. Fig. 3 is a diagram illustrating an example flow of a process for estimating a growth index in the plant growth observation apparatus 3000 of the plant growth observation system 1 according to the present example embodiment.

As illustrated in Fig. 3, the plant body region extraction unit 3100 generates plant body image data R representing an image of a plant body 1000 from the captured image data representing an image of the plant body 1000 sent from the imaging apparatus 2000 (step S31).

Then, the region division unit 3200 divides the plant body image represented by the plant body image data R generated at step S31 into two regions, upper and lower regions (top and bottom regions) in accordance with a predetermined division condition stored in the division condition storage unit 4200. The region division unit 3200 then generates the division image data D (division image data D-1 and division image data D-2) which is consisting of an image of each of the region (step S32).

Then, the division data statistic calculation unit 3301 of the statistic calculation unit 3300 calculates the statistic ST-1 using pixel information contained in the division image data D-1 generated at step S32. Similarly, the division data statistic calculation unit 3302 of the statistic calculation unit 3300 calculates statistic ST-2 using pixel information contained in the division image data D-2 generated at step S32 (step S33).

Then, the growth index estimation unit 3400 estimates a growth index using the statistic ST-1 and/or the statistic ST-2 calculated at step S33 (step S34).

By the process described above, the plant growth observation apparatus 3000 according to the present example embodiment can estimate a growth index that reflects the growth state of the plant body 1000.

Note that the growth index estimation unit 3400 may further include the function of using statistic ST calculated at any one or more times in the past and stored in the statistic storage unit 4300 to estimate growth indexes. This allows a user of the plant growth observation system 1 to check growth indexes of a plant body 1000 in the past in addition to the current growth index of the plant body 1000.

While the present example embodiment has been described using an example in which plant body image data R is used to perform processing in the region division unit 3200, the statistic calculation unit 3300 and the growth index estimation unit 3400, captured image data itself may be used to perform the processing in the units described above.

### (Advantageous Effects)

As described above, the plant growth observation system 1 according to the present example embodiment estimates the growth state of a plant body 1000 with improved accuracy. The reasons are as follows. The region division unit 3200 in the plant growth observation apparatus 3000 of the plant growth observation system 1 divides a captured image which is captured by the imaging apparatus 2000 into a plurality of segmented regions based on growth characteristics of the plant body 1000. In addition, for each of the plurality of segmented regions, the statistic calculation unit 3300 calculates statistics ST on division image data D representing an image of the segmented region and the growth index estimation unit 3400 estimates a growth index using the statistics ST.

The statistics ST reflect the growth characteristic of the plant body 1000 because the statistics ST are calculated for each of segmented regions into which a plant body image is divided in accordance with the growth characteristic. Accordingly, the growth index of the plant body 1000 estimated by the growth index estimation unit 3400 reflects the growth characteristic of the plant body 1000. Since the growth index indicates the growth state of the plant body 1000, it can be said that the growth index estimation unit 3400 estimates the growth state of the plant body 1000.

The plant growth observation system 1 according to the present example embodiment estimates the growth state of a plant body 1000 with improved accuracy because the growth state estimated by the plant growth observation apparatus 3000 reflects the growth state of the plant body 1000 as described above. Further, the plant growth observation system 1 provides a growth index of a plant body 1000 that has improved accuracy.

When the growth index is a quantified one, the growth index estimation unit 3400 can calculate the growth index with higher accuracy. The user can easily perceive the growth state of the plant body 1000 using the quantified growth index.

The region division unit 3200 divides a plant body image so that, among the parts of a plant body 1000 including in plant body image data R, parts that have an elongation characteristic, i.e. a greater amount of elongation, and parts that have a non-elongation characteristic, i.e. a smaller amount of elongation, belong to different regions in the plant body image.

This prevents parts having different growth characteristics from being included in the same region. Thus, the statistic on each segmented region calculated by the statistic calculation unit 3300 more directly reflects the growth characteristic.

Further, a captured image is a substantially-vertical-plane-projected image and the region division unit 3200 divides a plant body image represented by plant body image data R into two regions: a top region and a bottom region. The reason is that, among the parts of a plant body 1000, parts that have the elongation characteristic, such as terminal buds, more often appear in the top region and parts that have the non-elongation characteristic, such as the base of the main stem, more often appear in the bottom region. Thus, the statistic on each segmented region calculated by the statistic calculation unit 3300 more directly reflects the growth state.

Accordingly, the plant growth observation system 1 according to the present example embodiment estimates the growth state of a plant body 1000 with improved accuracy.

### <Second Example Embodiment>

A second example embodiment of the present invention will be described next with reference to drawings. For convenience of explanation, components that have the same functions as components in the drawings described in the description of the first example embodiment are given the same reference numerals and the description of the components will be omitted.

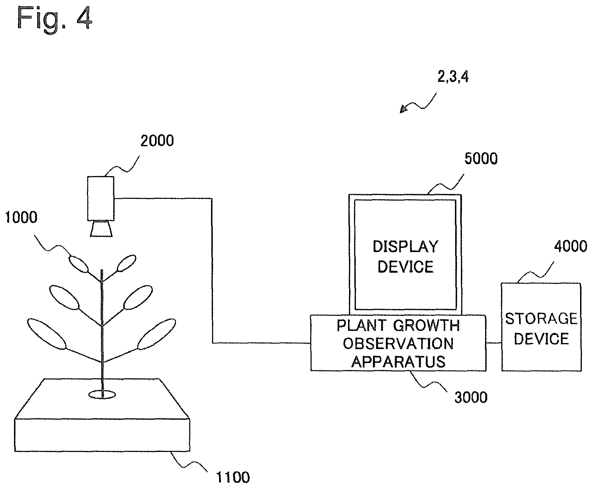

Fig. 4 is a diagram illustrating an example configuration of a plant growth observation system 2 according to the present example embodiment. The plant growth observation system 2 in Fig. 4 differs from the plant growth observation system 1 illustrated in Fig. 1 in the direction in which an imaging apparatus 2000 captures an image of a plant body 1000.

The imaging apparatus 2000 according to the present example embodiment captures an image of the plant body 1000 in a direction substantially perpendicular to the horizontal plane (in a vertical direction, i.e. from directly above the plant body 1000) as illustrated in Fig.4. Accordingly, a captured image which is captured by the imaging apparatus 2000 is a substantially-horizontal-plane-projected image of the plant body 1000 and captured image data output from the imaging apparatus 2000 is substantially-horizontal-plane-projected image data of the plant body 1000.

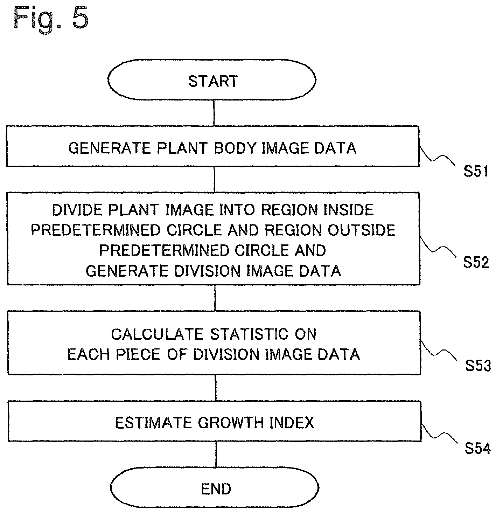

An operation in a plant growth observation apparatus 3000 of the plant growth observation system 2 according to the present example embodiment will be described below. Fig. 5 is a diagram illustrating an example flow of a process for estimating a growth index in the plant growth observation apparatus 3000 of the plant growth observation system 2 according to the present example embodiment. The plant growth observation apparatus 3000 in the present example embodiment has the same functional configuration as the plant growth observation apparatus 3000 in the plant growth observation system 1 illustrated in Fig. 2. The flow of the process for estimating a growth index according to the present example embodiment will therefore be described below with reference to Figs. 2 and 5.

As illustrated in Fig. 5, a plant body region extraction unit 3100 generates plant body image data R representing an image of the plant body 1000 from captured image data representing the image of the plant body 1000 sent from the imaging apparatus 2000 (step S51).

Then, a region division unit 3200 divides the plant body image represented by the plant body image data R generated at step S51 into two regions in accordance with a predetermined division condition stored in a division condition storage unit 4200. The region division unit 3200 then generates pieces of division image data D (division image data D-1 and division image data D-2) which is consisting of an image of each regions (step S52).

A division condition in the present example embodiment will now be described. Like the division condition storage unit 4200 according to the first example embodiment, the division condition storage unit 4200 stores predetermined division bases. A division condition in the present example embodiment may be, for example, "divide a plant body image using a given circle centered at the main stem of a plant body 1000". The division condition is registered in advance based on a growth characteristic of the plant body 1000.

Leaves of most plant bodies 1000 grow radially-outwardly from their main stems. In other words, when a plant body 1000 is viewed from a direction substantially perpendicular to the horizontal plane (from directly above the plant body 1000), parts near the main stem have the non-elongation characteristic and parts away from the main stem, such as leaves, have the elongation characteristic.

Since the imaging apparatus 2000 captures an image of the plant body 1000 from directly above the plant body 1000 as described above, the captured image data representing a captured image which is captured by the imaging apparatus 2000 is substantially-horizontal-plane-projected image data of the plant body 1000. Accordingly, a circle centered at the main stem of a plant body 1000 is used as a reference line in the present example embodiment. By using the reference line, the region division unit 3200 divides plant body image data R into regions: a region inside the reference line (an inner region) and a region outside the reference line (an outer region). The division condition is set so that parts that have the elongation characteristic are included in the outer region and parts that have the non-elongation characteristic are included in the inner region.

Note that the circle used in the division condition in the present example embodiment may be a perfect circle or may be an ellipse. A portion of an arc of the circle may be a straight line or a portion of the circle may be indented inward. In essence, the region division unit 3200 divides plant body image data R into regions: a region inside a predetermined circular line and a region outside the circular line in accordance with a division condition set as described above. The region division unit 3200 then generates pieces of division image data D (division image data D-1 and division image data D-2) which is consisting of each regions.

Then, a statistic calculation unit 3300 calculates a statistic ST using pixel information contained in the division image data D generated at step S52 (step S53). Then a growth index estimation unit 3400 estimate a growth index using the statistic ST calculated at step S53 (step S54). Note that step S53 and step S54 are similar in processing to steps S33 and step S34, respectively, described in the description of the first example embodiment and therefore detailed description of the steps will be omitted.

By the process described above, the plant growth observation apparatus 3000 according to the present example embodiment can estimate a growth index that reflects the growth state of the plant body 1000.

### (Advantageous Effects)

In the present example embodiment, a captured image is a substantially-horizontal-plane-projected image. Leaves of most plant bodies 1000 grow radially-outwardly from their main stems. This is because when a plant body 1000 is viewed from a direction substantially perpendicular to the horizontal plane (from directly above the plant body 1000), many parts having the elongation characteristic are located radially away from a main stem and many parts that have the non-elongation characteristic are located near the main stem.

The region division unit 3200 divides a plant body image represented by plant body image data R into two regions: a region inside a predetermined circular line substantially centered at the main stem of a plant body 1000 and a region outside the circular line. Consequently, statistics on each of the segmented regions calculated by the statistic calculation unit 3300 more directly reflects growth characteristics.

Accordingly, the plant growth observation system 2 according to the present example embodiment estimates the growth state of a plant body 1000 with improved accuracy, like the plant growth observation system 1 described above.

While the first and second example embodiments have been described by using an example in which one continuous line or circular line are used to divide a plant body image into two regions, a plurality of reference lines may be used for division. For example, a plurality of circles may be used as reference lines for division and a plant body image may be divided into regions: an entire region inside each circle line and the other regions. Any division condition may be used that is set based on the elongation characteristic and the non-elongation characteristic of a plant body 1000.

### <Third Example Embodiment>

A third example embodiment of the present invention will be descried next with reference to drawings. For convenience of explanation, components that have the same functions as components in the drawings described in the descriptions of the first and second example embodiments are given the same reference numerals and the description of the components will be omitted.

While the first and second example embodiments have been described using an example in which the region division unit 3200 divides plant body image data R into two, the region division unit 3200 may divide a plant body image into any number of regions. Any number of divisions that is based on growth characteristics of a plant body 1000 may be used.

The present example embodiment will be described using an example in which the number of divisions is N (N is a natural number greater than or equal to 2). Note that a plant growth observation system 3 according to the present example embodiment may be configured with an imaging apparatus 2000 that captures images of a plant body 1000 in a horizontal direction as illustrated in Fig. 1 or may be configured with an imaging apparatus 2000 that captures images of a plant body 1000 in directly above the plant body 1000 as illustrated in Fig. 4.

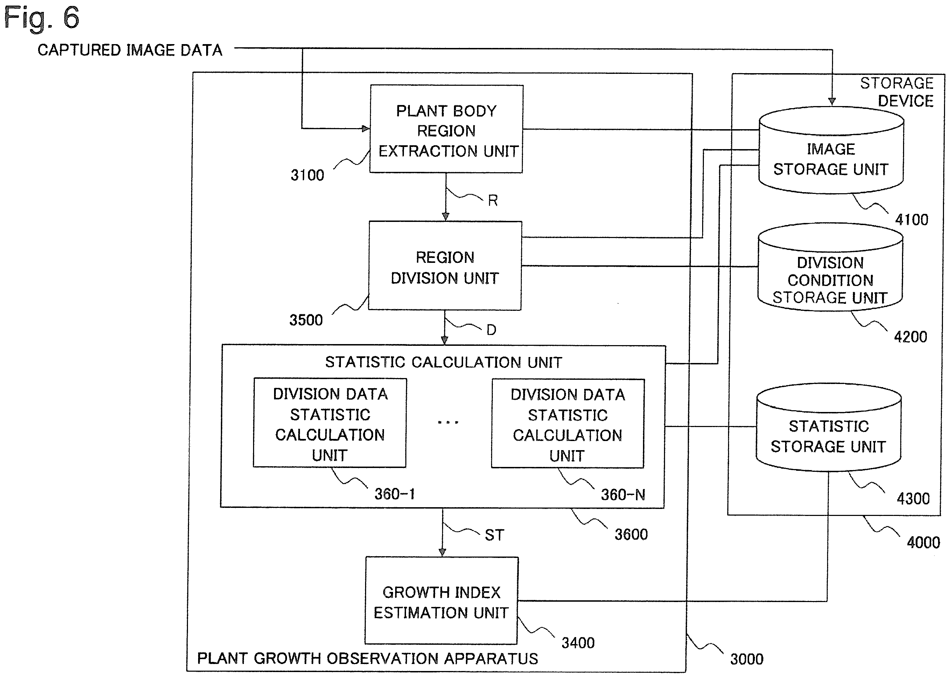

Fig. 6 is a functional block diagram illustrating example functional configurations of a plant growth observation apparatus 3000 and a storage device 4000 in the plant growth observation system 3 according to the present example embodiment. As illustrated in Fig. 6, the plant growth observation apparatus 3000 includes a plant body region extraction unit 3100, a region division unit 3500, a statistic calculation unit 3600, and a growth index estimation unit 3400. The storage device 4000 includes an image storage unit 4100, a division condition storage unit 4200 and a statistic storage unit 4300.

The division condition storage unit 4200 stores a division condition to divide plant body image data R into N pieces of data The division condition is set such that parts that have the same growth characteristic are included in the same region and parts that have different growth characteristic are not included in the same region. An example will be described in which plant body image data R includes the following parts (A) to (C).
(A) A part that has an elongation characteristic of elongating at a rate greater than L mm (L is an arbitrary number) within a predetermined time period.
(B) A part that has an elongation characteristic of elongating at a rate greater than M mm and less than or equal to L mm within a predetermined time period (where M is an arbitrary number smaller than L).
(C) A part that has a non-elongation characteristic.
In this case, a division condition that is set so that the parts (A) to (C) are included in different regions is stored in the division condition storage unit 4200.

The region division unit 3500 divides the plant body image data R into N pieces of data in accordance with the division condition to generate division image data D-1 to division image data D-N. The region division unit 3500 provides the generated division image data D to the statistic calculation unit 3600.

The statistic calculation unit 3600 receives, from the region division unit 3500, data generated by the region division unit 3500, which is division image D (division image data D-1 to division image data D-N) representing division images into which a plant body image is divided. As illustrated in Fig. 6, the statistic calculation unit 3300 includes as many division data statistic calculation units (360-1 to 360-N) as the number of divisions of a plant body image. This allows calculations of statistics on pieces of division image data D to be performed in parallel.

Note that, like the statistic calculation unit 3300, the statistic calculation unit 3600 may be configured to sequentially calculate the statistic each pieces of divided data, rather than including as many division data statistic calculation units as the number of divisions of a plant body image.

Operation of each of the division data statistic calculation units (360-1 to 360-N) is similar to the operation of the division data statistic calculation unit 3301 or the division data statistic calculation unit 3302 in the first example embodiment and therefore detailed description of the division data statistic calculation units will be omitted.

The statistic calculation unit 3600 then provides the statistics (ST-1 to ST-N) calculated by the division data statistic calculation units (360-1 to 360-N) to the growth index estimation unit 3400. Like the growth index estimation unit 3400 in the first example embodiment, the growth index estimation unit 3400 estimates the growth index of the plant body 1000 using the statistics ST to.

### (Advantageous Effects)

The plant growth observation system 3 according to the present example embodiment has the same effects as the plant growth observation systems according to the first and second example embodiments described above. In addition, the plant growth observation system 3 is capable of estimating a growth index that more directly reflects growth characteristics of a plant body 1000 because the number of divisions of a plant body image is set to N in the division condition so that parts that have different growth characteristics are not included in the same region.

### <Fourth Example Embodiment>

A fourth example embodiment of the present invention will be described next. For convenience of explanation, components that have the same functions as components in the drawings described in the descriptions of the first to third example embodiments are given the same reference numerals and the description of the components will be omitted.

While the example embodiments have been described using examples in which a division condition is stored in the division condition storage unit 4200 in advance, the present invention is not so limited. A division condition may be set by using captured image data.

A plant growth observation system 4 according to the present example embodiment will be described using an example in which the plant growth observation system 4 further includes a setting unit that sets a division condition in a plant growth observation apparatus 3000 of a plant growth observation system 1 according to the first example embodiment, and does not include a division condition storage unit 4200 in a storage device 4000. Note that the plant growth observation system 4 according to the present example embodiment may have a configuration in which a setting unit is provided in a plant growth observation apparatus 3000 in a plant growth observation system 2 according to the second example embodiment or a plant growth observation system 3 according to the third example embodiment.

The plant growth observation system 4 according to the present example embodiment will be described on the assumption that an imaging apparatus 2000 captures an image of a plant body 1000 from a horizontal direction as illustrated in Fig. 1. Note that the plant growth observation system 4 may be configured with an imaging apparatus 2000 that captures images of a plant body 1000 from directly above the plant body 1000 as illustrated in Fig. 4.

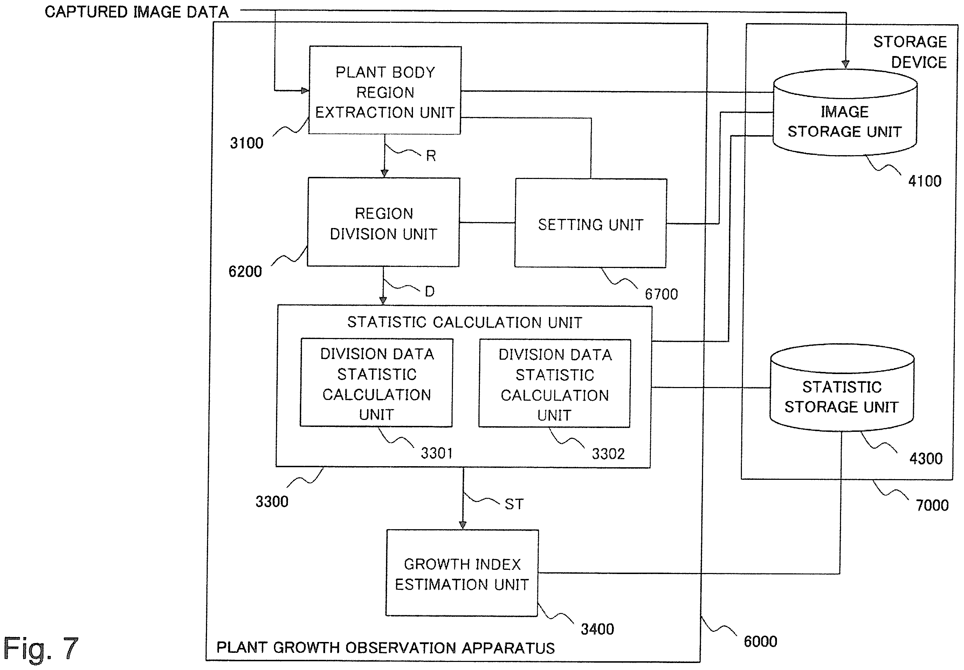

Fig. 7 is a functional block diagram illustrating example functional configurations of a plant growth observation apparatus 6000 and a storage device 7000 in the plant growth observation system 4 according to the present example embodiment. As illustrated in Fig. 7, the plant growth observation apparatus 6000 includes a plant body region extraction unit 3100, a region division unit 6200, a statistic calculation unit 3300, a growth index estimation unit 3400, and a setting unit 6700. The storage device 7000 includes an image storage unit 4100 and a statistic storage unit 4300.

The storage device 7000 is configured without the division condition storage unit 4200, which is included in the storage device 4000 of the first to third example embodiments described above. The remaining of the configuration of the storage device 7000 is the same as the configuration of the storage device 4000 and therefore the description thereof will be omitted. Note that like the storage device 4000, the storage device 7000 may include a division condition storage unit 4200. In that case, a division condition calculated by the setting unit 6700, which will be described later, is stored in the division condition storage unit 4200.

Further, like the storage device 4000, the storage device 7000 may be built in the plant growth observation apparatus 6000.

The setting unit 6700 is a means for setting a division condition to be used for dividing a plant body image. The setting unit 6700 receives plant body image data R from the plant body region extraction unit 3100. The setting unit 6700 then calculates a division condition using the received plant body image data R and sets the division condition.

An example of calculation of a division condition performed by the setting unit 6700 will be described. By using plant body image data R, the setting unit 6700 adds a plurality of reference points to a plant body image represented by the plant body image data R. The reference points are preferably points suited for use in image matching. For example, the reference points are preferably feature points such as ends of leaves, leaf veins and the like. Note that there is no limit to the number of reference points, and the number of reference points may be appropriately changed depending on factors such as the performance of the system and calculation time requirements.

The setting unit 6700 retrieves data representing a past captured image or a plant body image in the past, which will be compared with plant body image data R from the image storage unit 4100. Past plant body image data is data of a plant body image extracted from a captured image which is captured before a predetermined time (for example 10 minutes) from the time when a captured image represented by the captured image data that is original data of the plant body image data R.

While the present example embodiment will be described with respect to calculation of a division condition by the setting unit 6700 using the plant body image data R and past plant body image data (hereinafter referred to as plant body image data PR), the present example embodiment is not so limited. The setting unit 6700 may use captured image data (first captured image data) instead of the plant body image data R and use past captured image data (second captured image data) instead of the plant body image data PR. One past plant body image or a plurality of past plant body images may be used.

By using the plant body image data R and the plant body data PR, the setting unit 6700 calculates an amount of change in location for each of predetermined reference points (an amount of movement of the point). The setting unit 6700 then determines whether the part including each reference point has an elongation characteristic or a non-elongation characteristic using the amount of movement, and sets a division condition such that parts having the elongation characteristic and parts having non-elongation characteristic belong to different regions.

In the present example embodiment, the setting unit 6700 sets a division condition such that parts that have the elongation characteristic are included in a top region and parts that have the non-elongation characteristic are included in a bottom region.

The setting unit 6700 preferably determines the predetermined value or a division ratio for the division condition so as to divide a region into two with a minimum value so that the average value of the amounts of movements of the reference points included in the top region is greater than the average value of the amounts of movement of the reference points in the bottom region.

For example, the setting unit 6700 determines a part including reference points with amounts of movement greater than or equal to a predetermined value to be a part that has the elongation characteristic and determines a part that includes reference points with amounts of movement smaller than the predetermined value to be a part that has the non-elongation characteristic. The setting unit 6700 then sets a division condition such that the parts having the elongation characteristic and the parts having the non-elongation characteristic belong to different regions.

Note that the setting unit 6700 may determine points with amounts of movement greater than or equal to a first predetermined value to be parts having the elongation characteristic and may determine points with amounts of movement smaller than a second predetermined value which is smaller than the first predetermined value to be parts having the non-elongation characteristic.

The setting unit 6700 then provides the set division condition to the region division unit 6200. Note that the setting unit 6700 may store the set division condition in the storage device 4000.

The region division unit 6200 receives the division condition from the setting unit 6700. The region division unit 6200 divides a plant body image represented by the plant body image data R into two regions, a top region and bottom region, in accordance with the received division condition. The other functions of the region division unit 6200 are the same as those of the region division unit 3200.

### (Growth Index Estimation Process)

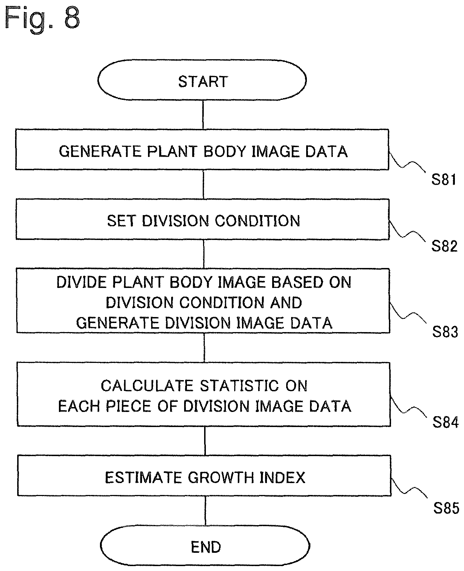

An operation in the plant growth observation apparatus 6000 of the plant growth observation system 4 according to the present example embodiment will be described next. Fig. 8 is a diagram illustrating an example flow of the growth index estimation process in the plant growth observation apparatus 6000 of the plant growth observation system 4 according to the present example embodiment.

As illustrated in Fig. 8, the plant body region extraction unit 3100 generates plant body image data R representing an image of a plant body 1000 from the captured image data representing the image of the plant body 1000 sent from the imaging apparatus 2000 (step S81).

Then the setting unit 6700 sets a division condition by using the plant body image data R generated at step S81 and past plant body image data or the past captured image data (step S82).

Then the region division unit 6200 divides the plant body image represented by the plant body image data R set at step S81 into two regions in accordance with the division condition set at step S82. The region division unit 6200 generates pieces of division image data D (division image data D-1 and division image data D-2) which is consisting of an image of each regions (step S83).

Then the statistic calculation unit 3300 calculates a statistic ST using pixel information included in the division image data D generated at step S83 (step S84). Then the growth index estimation unit 3400 estimates a growth index using the statistic ST calculated at step S84 (step S85). Note that step S84 and step S85 are similar in processing to step S33 and step S34, respectively, described in the description of the first example embodiment and therefore detailed description of the steps will be omitted.

By the process described above, the plant growth observation apparatus 6000 according to the present example embodiment can estimate a growth index that reflects the growth state of the plant body 1000.

### (Advantageous Effects)

The plant growth observation system 4 according to the present example embodiment has the same advantageous effects as the plant growth observation systems according to the first and second example embodiments described above. In addition, since the setting unit 6700 dynamically sets a division condition by using received plant body image data R, the division condition more directly reflects a plant variety or changes in an elongating plant body region than a predetermined division condition used for dividing a plant body image. The statistic calculation unit 3300 can calculate a statistic that more directly reflects growth characteristic of a plant body 1000 because the region division unit 6200 divides the plant body image in accordance with such a dynamically set division condition. Consequently, the growth index estimation unit 3400 is capable of estimating the growth state of the plant body 1000 with improved accuracy.

The plant growth observation system 4 according to the present example embodiment thus provides a growth index of a plant body 1000 that has improved accuracy.

### <Fifth Example Embodiment>

A fifth example embodiment of the present invention will be described next with reference to drawings. In the description of the present example embodiment, a minimum configuration for solving the issues to be solved by the present invention will be described.

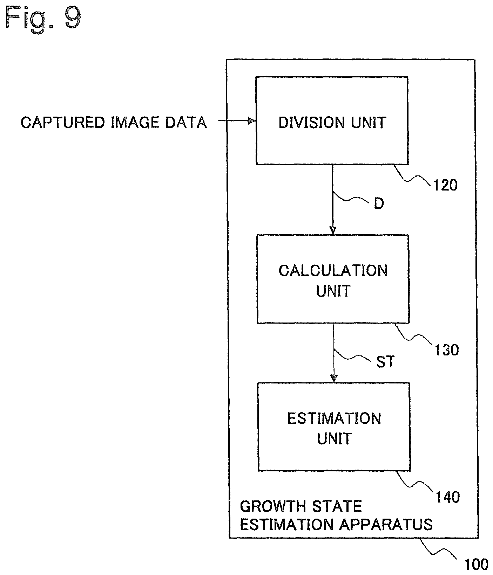

A growth state estimation apparatus 100 according to the present example embodiment is included in the plant growth observation apparatus in the plant growth observation system according to any of the first to fourth example embodiments described above. Fig. 9 is a functional block diagram illustrating a functional configuration of the growth state estimation apparatus 100 according to the present example embodiment. As illustrated in Fig. 9, the growth state estimation apparatus 100 includes a division unit 120, a calculation unit 130 and an estimation unit 140.

The division unit 120 is equivalent to the region division unit 3200, the region division unit 3500 or the region division unit 6200. The division unit 120 receives captured image data representing a captured image of the plant body 1000. The division unit 120 divides the captured image represented by the captured image data into a plurality of segmented regions based on a growth characteristic of the plant body 1000. The division unit 120 provides, to the calculation unit 130, division image data representing an image of the segmented region which is divided.

The calculation unit 130 is equivalent to the statistic calculation unit 3300 or the statistics calculation unit 3600. The calculation unit 130 receives, from the division unit 120, division image data representing the image of the segmented region which is divided by the division unit 120. The calculation unit 130 then calculates statistics on the received division image data for each segmented region. The calculation unit 130 provides the calculated statistics on each segmented region to the estimation unit 140.

The estimation unit 140 is equivalent to the growth index estimation unit 3400. The estimation unit 140 receives statistics on each segmented region calculated by the calculation unit 130 from the calculation unit 130. The estimation unit 140 then estimates the growth state of the plant body 1000 based on the statistics on each segmented region.

Statistics on each segmented region thus calculated by the calculation unit 130 reflect growth characteristics of the plant body 1000. Accordingly, the growth characteristics of the plant body 1000 estimated by the estimation unit 140 reflect the growth characteristics of the plant body 1000. Consequently, the growth state estimation apparatus 100 according to the present example embodiment estimates the growth state of the plant body 1000 with improved accuracy.

### (Hardware Configuration)

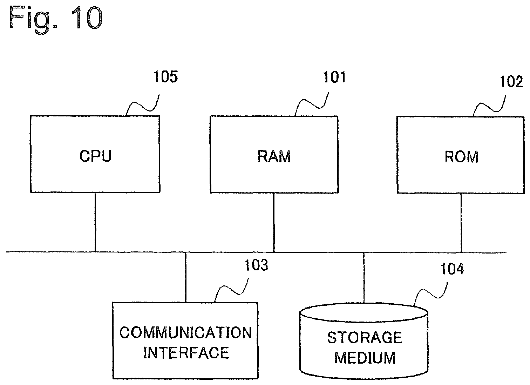

The components of any of the plant growth observation apparatus and the storage devices illustrated in Figs. 2, 6 and 7 and the components of the growth state estimation apparatus 100 illustrated in Fig. 9 may be implemented by hardware resources illustrated in Fig. 10. The configuration illustrated in Fig. 10 includes a Random-Access Memory (RAM) 101, a Read Only Memory (ROM) 102, a communication interface 103, a storage medium 104 and a Central Processing Unit (CPU) 105. The CPU 105 controls the entire operations of a plant growth observation apparatus and a storage device by loading various software programs (computer programs) stored in the ROM 102 or the storage medium 104 into the RAM 101 and executing the software programs. Specifically, the CPU 105 executes software programs that implement the functions of the plant growth observation apparatus and the storage device while referring to the ROM 102 or the storage medium 104 as appropriate in any of the example embodiments.

The present invention described using the example embodiments as an illustration is accomplished by providing a computer program capable of implementing the functions described above to the plant growth observation apparatus and the storage device and then loading, by the CPU 150, the computer program into the RAM 101 and executing the computer program.

Such a computer program provided may be stored in computer-readable storage device such as a readable and writable memory (a temporary storage medium) or a hard disk device. In such a case, the present invention can be construed as being configured by code representing such the computer program or a storage medium storing the computer program.

In the description of the example embodiments given above, cases have been described in which the functions indicated in the blocks of the plant growth observation apparatuses and the storage devices illustrated in Figs. 2, 6 and 7 and the growth state estimation apparatus 100 illustrated in Fig. 9 are implemented by a software program as an illustration of the functions executed by the CPU 105 depicted in Fig. 10. However, some or all of the functions illustrated in the blocks in Figs. 2, 6, 7 and 9 may be implemented as hardware circuitry.

Note that the example embodiments described above are preferred example embodiments of the present invention and are not intended to limit the scope of the present invention to the example embodiments described above and those skilled in the art can make various modifications and substitutions to the example embodiments described above and construct modes with various changes made without departing from the spirit of the present invention.

### [Example]

While an example of the present invention will be described below, the present invention is not limited to the example.

In the present example, a plant growth observation system 1 according to the first example embodiment was used to grow a plant body 1000 and to observe the growth state of the plant body 1000. The plant body 1000 under growth observation was Momotaro, which is a tomato variety. The number of seedlings being grown was one. In the present example, it-planter from IT Plants Corporation was used to grow the tomato plant. The it-planter is a hydroponic planter which is approximately 30 cm in width, approximately 30 cm in depth, and approximately 33 cm in height and is equipped with a built-in nutrient solution tank and a built-in nutrient solution circulating pump. The operation intervals of the nutrient solution circulating pump was set at four hours in the present example. Specifically, the nutrient solution circulating pump operated at 00:00, 04:00, 08:00, 12:00, 16:00 and 20:00. The operation intervals were empirically obtained values and were adjusted so that significant withering did not occur in the plant body 1000.

The imaging apparatus 2000 used was C920 from Logicool. The plant body 1000 extended outward from a plate plane of a plant body supporter 1100 similar to the top surface of the plant body supporter 1100 in Fig. 1. In captured images which were captured by the imaging apparatus 2000, the X-axis was a direction substantially parallel to the plane and the Y-axis was a direction substantially perpendicular to the plane. The Y-axis was substantially parallel to the vertical line. In other words, the positive direction of the Y-axis was a substantially vertical downward direction in a captured image.

After settled planting of the tomato plant, the tomato plant was grown for one week and then the plant body 1000 were imaged at intervals of 10 minutes using the imaging apparatus 2000.

In the present example, a division condition was used that divides a plant body image with a straight line parallel to the X-axis so that the ratio between the lengths of pieces of division image data D along the Y-axis is 1:1. In the present example, the lower region (on the plant body supporter 1100 side) of the plant body image divided with the straight line parallel to the X-axis will be referred to as the bottom region and the upper region will be referred to as the top region.

Statistics were the average value of a component in the X-axis direction of optical flow (X component) and the average value of a component in the Y-axis direction (Y component) with 500 reference points from the division image data D, as described in the description of the first example embodiment.

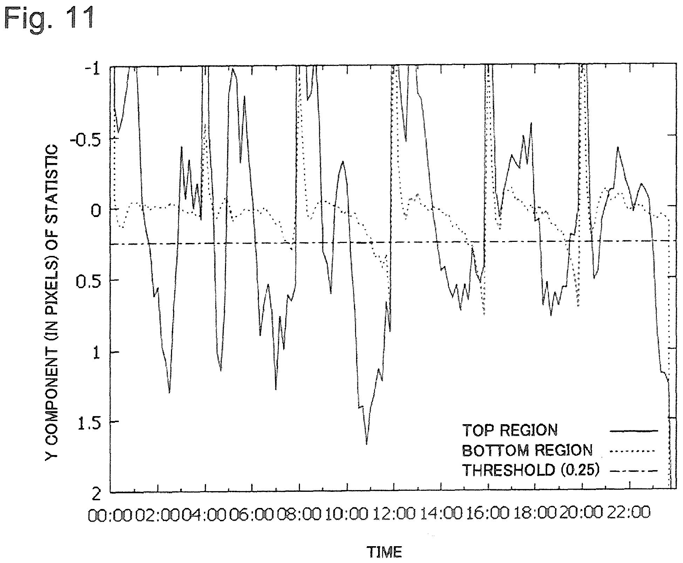

Statistics calculated in the present example will be described with reference to Fig. 11. Fig. 11 is a graph of changes in the statistics over 24 hours on an observation day one week after the settled planting. The horizontal axis represents time and the vertical axis represents the Y component of the statistics ST (in pixels). The dashed curve in Fig. 11 represents the Y component of the statistics (statistics ST-G) on division image data D in the bottom region, and the solid curve represents Y component of the statistics (statistics ST-T) on division image data D in the top region, the division image data D in the bottom region and the division image data D in the top region representing segmented regions obtained by dividing the plant body. A positive Y component represents that the plant body 1000 moved toward the plant body supporter 1100 in the captured image data. This movement of the plant body 1000 occurs when the plant body 1000 fades due to deficiency of water. On the other hand, a negative Y components represent that the plant body 1000 moved in the direction opposite to the plant body supporter 1100 in the captured image data. This movement of the plant body 1000 occurs when the plant body 1000 is watered and the stem and leaves become stiff again and/or when the stem and leaves elongated because of growth.

In the present example, a growth index estimation unit 3400 estimates a growth index indicating whether the plant body 1000 is to be watered. Specifically, when the Y component of the statistics ST-G in the bottom region is 0.25 pixels or more, the growth index estimation unit 3400 determines that the plant body 1000 needs to be watered and sends a character string, "Watering is required", indicating that the plant body 1000 needs to be watered to a display device 5000. Otherwise, the growth index estimation unit 3400 sends a character string, "Watering is not required", to the display device 5000.

Attention is given to the fact that the amount of water supplied to the plant body 1000 was small right before 00:00, 04:00, 08:00, 12:00, 16:00 and 20:00 at which the nutrient solution circulating pump was activated. As represented by the dashed line in Fig. 11, the Y component of the statistics ST-G of the bottom region was 0.25 or more right before 08:00, 12:00, 16:00 and 20:00. When Y component of the statistics ST-G was 0.25 pixels or more, the character string "Watering is required" was displayed on the display device 5000. After activation of the nutrient solution circulating pump, "Watering is not require" was displayed on the display device 5000.

Further, it has been found that there is regularity in that Y component of statistic ST-G is 0.25 pixels or more right before 8:00, 12:00, 16:00 and 20:00 and is less than 0.25 pixels at the other times, as illustrated in Fig. 11. In contrast, such regularity has not been found in the Y component of the statistics ST-T in the top region.

Thus, it has been shown that the plant growth observation system 1 is capable of estimating whether the plant body 1000 needs to be watered by comparing the Y component of statistics ST-G in the bottom region with a predetermined threshold value (0.25 in the present example).

### (Summary)

The some or all of the example embodiments disclosed above can be described as, but not limited to, the following supplementary notes.
(Supplementary Note 1) A growth state estimation apparatus including: division means for dividing a captured image of a plant body into a plurality of segmented regions, based on growth characteristics of the plant body; calculation means for calculating, for each of the plurality of segmented regions that is divided by the division means, a statistic on division image data representing an image of the segmented region; and estimation means for estimating a growth state of the plant body, based on the statistics calculated by the calculation means.
(Supplementary Note 2) The growth state estimation apparatus according to Supplementary Note 1, wherein the division means divides the captured image into the plurality of segmented regions in such a way that, among parts of the plant body included in the captured image, a part that has a greater amount of elongation and a part that has a smaller amount of elongation belong to different regions.
(Supplementary Note 3) The growth state estimation apparatus according to Supplementary Note 2, wherein the captured image is a substantially-vertical-plane-projected image of the plant body, and wherein the division means divides the captured image into regions, the regions being a top region and a bottom region.
(Supplementary Note 4) The growth state estimation apparatus according to Supplementary Note 2, wherein the captured image is a substantially-horizontal-plane-projected image of the plant body; and wherein the division means divides the captured image into regions, the regions being a region inside a predetermined circular line substantially centered at a main stem of the plant body and a region outside the predetermined circular line.
(Supplementary Note 5) The growth state estimation apparatus according to any one of Supplementary Notes 1 to 4, further including: setting means for setting a division condition used for dividing the captured image, wherein the division means divides the captured image into the plurality of segmented regions in accordance with the division condition set by the setting means.
(Supplementary Note 6) The growth state estimation apparatus according to Supplementary Note 5, wherein the setting means calculates an amount of movement at each of one or more predetermined points on the plant body by using first captured image data representing the captured image and second captured image data representing a captured image which is captured before a time at which the captured image represented by first captured image data is captured, and sets the division condition by using a plurality of calculated amounts of movement.
(Supplementary Note 7) The growth state estimation apparatus according to Supplementary Note 5 or 6, further including: image storage means for storing the captured image data; division condition storage means for storing the division condition; and statistic storage means for storing statistic calculated by the calculation means.
(Supplementary Note 8) A plant growth observation system including: an imaging apparatus that captures an image of a plant body; and a plant growth observation apparatus which receives, from the imaging apparatus, captured image data representing a captured image which is captured by the imaging apparatus, wherein the plant growth observation apparatus includes region division means for dividing the captured image represented by the received captured image data into a plurality of segmented regions, based on a growth characteristic of the plant body; statistic calculation means for calculating, for each of the plurality of segmented regions that is divided by the region division means, a statistic on division image data representing an image of the segmented region; and growth index estimation means for estimating a growth index indicating a growth state of the plant body, based on the statistic calculated by the statistic calculation means.
(Supplementary Note 9) The plant growth observation system according to Supplementary Note 8, wherein the division means divides the captured image into the plurality of segmented regions in such a way that, among the parts of the plant body included in the captured image, a part that has a greater amount of elongation and a part that has a smaller amount of elongation belong to different regions.
(Supplementary Note 10) The plant growth observation system according to Supplementary Note 9, wherein the captured image is a substantially-vertical-plane-projected image of the plant body, and wherein the division means divides the captured image into regions, the regions being a top region and a bottom region.
(Supplementary Note 11) The plant growth observation system according to Supplementary Note 9, wherein the captured image is a substantially-horizontal-plane-projected image of the plant body; and wherein the division means divides the captured image into regions, the regions being a region inside a predetermined circular line substantially centered at a main stem of the plant body and a region outside the circular line.
(Supplementary Note 12) The plant growth observation system according to any one of Supplementary Notes 8 to 11, further including setting means for setting a division condition used on dividing the captured image, wherein the division means divides the captured image into the plurality of segmented regions in accordance with the division condition set by the setting means.
(Supplementary Note 13) The plant growth observation system according to Supplementary Note 12, wherein the setting means calculates an amount of movement at each of one or more predetermined points on the plant body by using first captured image data representing the captured image and second captured image data representing a captured image which is captured before a time at which the captured image represented by first captured image data is captured, and sets the division condition by using a plurality of calculated amounts of movement.
(Supplementary Note 14) The plant growth observation system according to Supplementary Note 12 or 13, further including a storage device connected to the plant growth observation apparatus, wherein the storage device includes: image storage means for storing the captured image data; division condition storage means for storing the division condition; and statistics storage means for storing statistic calculated by the statistic calculation means.
(Supplementary Note 15) A growth state estimation method including: dividing a captured image of a plant body into a plurality of segmented regions, based on a growth characteristic of the plant body; calculating, for each of the plurality of segmented regions that is divided, a statistic on division image data representing an image of the segmented region; and estimating a growth state of the plant body, based on the statistic calculated.
(Supplementary Note 16) A growth index estimation method including: imaging a plant body; receiving captured image data representing captured image which is captured; dividing the captured image represented by the received captured image data into a plurality of segmented regions, based on a growth characteristic of the plant body; calculating, for each of the plurality of segmented regions that is divided, a statistic on division image data representing an image of the segmented region; and estimating a growth index indicating a growth state of the plant body, based on the statistic calculated.
(Supplementary Note 17) A program for causing a computer to execute the processes of: dividing a captured image of a plant body into a plurality of segmented regions, based on a growth characteristic of the plant body; calculating, for each of the plurality of segmented regions that is divided, a statistic on division image data representing an image of the segmented region; and estimating a growth state of the plant body, based on the statistic calculated.
(Supplementary Note 18) A computer-readable non-transitory recording medium storing the program according to Supplementary Note 17.

Plant growth observation apparatuses according to the present invention are applicable to observation of the growth of plants, such as vegetables, fruits and flowers grown in a greenhouse, grown outdoors and otherwise grown. Plant growth observation apparatuses according to the present invention are also applicable to automated plant growth apparatuses in plant factories and the like in combination with a control device for an apparatus such as irrigation, liquid supply, and heating, ventilation, and air-conditioning apparatuses.

This application is based upon and claims the benefit of priority from Japanese Patent Application No. 2014-153551 filed on July 29, 2014, the entire disclosure of which is incorporated herein.

### Reference signs List

- 1, 2, 3, 4: Plant growth observation system
- 1000: Plant body
- 1100: Plant body supporter
- 2000: Imaging apparatus
- 3000: Plant growth observation apparatus
- 3100: Plant body region extraction unit
- 3200: Region division unit
- 3300: Statistic calculation unit
- 3301, 3302: Division data statistic calculation unit
- 3400: Growth index estimation unit
- 3500: Region division unit
- 3600: Statistic calculation unit
- 4000: Storage device
- 4100: Image storage unit
- 4200: Division condition storage unit
- 4300: Statistic storage unit
- 5000: Display device
- 6000: Plant growth observation apparatus
- 6200: Region division unit
- 6700: Setting unit
- 7000: Storage device
- 100: Growth state estimation apparatus
- 120: Division unit
- 130: Calculation unit
- 140: Estimation unit
- 101: RAM
- 102: ROM
- 103: Communication interface
- 104: Storage medium
- 105: CPU
- R: Plant body image data
- PR: Past plant body image data
- D: Division image data
- P: Past captured image data
- ST: Statistic

## Claims

1. A growth state estimation apparatus comprising:
division means for dividing a captured image of a plant body into a plurality of segmented regions, based on a growth characteristic of the plant body;
calculation means for calculating, for each of the plurality of segmented regions that is divided by the division means, a statistic on division image data representing an image of the segmented region; and
estimation means for estimating a growth state of the plant body, based on the statistic calculated by the calculation means.

2. The growth state estimation apparatus according to claim 1, wherein the division means divides the captured image into the plurality of segmented regions in such a way that, among parts of the plant body included in the captured image, a part that has a greater amount of elongation and a part that has a smaller amount of elongation belong to different regions.

3. The growth state estimation apparatus according to claim 2,
wherein the captured image is a substantially-vertical-plane-projected image of the plant body; and
wherein the division means divides the captured image into a top region and a bottom region.

4. The growth state estimation apparatus according to claim 2,
wherein the captured image is a substantially-horizontal-plane-projected image of the plant body; and
wherein the division means divides the captured image into a region inside a predetermined circular line substantially centered at a main stem of the plant body and a region outside the predetermined circular line.

5. The growth state estimation apparatus according to any one of claims 1 to 4, further comprising:
setting means for setting a division condition used on dividing the captured image,
wherein the division means divides the captured image into the plurality of segmented regions in accordance with the division condition set by the setting means.

6. The growth state estimation apparatus according to claim 5,
wherein the setting means calculates an amount of movement at each of one or more predetermined points on the plant body by using first captured image data representing the captured image and second captured image data representing a captured image which is captured before a time at which the captured image represented by first captured image data is captured, and sets the division condition by using a plurality of calculated amounts of movement.

7. A plant growth observation system comprising:
the growth state estimation apparatus according to any one of claims 1 to 6; and
an imaging apparatus that captures an image of the plant body and provides a captured image for the division means.

8. A growth state estimation method comprising:
dividing a captured image of a plant body into a plurality of segmented regions, based on a growth characteristic of the plant body;
calculating, for each of the plurality of segmented regions that is divided, a statistic on division image data representing an image of the segmented region; and
estimating a growth state of the plant body, based on the statistic calculated.

9. A growth index estimation method comprising:
imaging a plant body;
receiving captured image data representing captured image which is captured;
dividing the captured image represented by the received captured image data into a plurality of segmented regions, based on a growth characteristic of the plant body;
calculating, for each of the plurality of segmented regions that is divided, a statistic on division image data representing an image of the segmented region; and
estimating a growth index indicating a growth state of the plant body, based on the statistic calculated.

10. A computer-readable non-transitory recording medium storing a program which causes a computer to execute the processes of:
dividing a captured image of a plant body into a plurality of segmented regions, based on a growth characteristic of the plant body;
calculating, for each of the plurality of segmented regions that is divided, a statistic on division image data representing an image of the segmented region; and
estimating a growth state of the plant body, based on the statistic calculated.
